# EUROPÄISCHE PATENTSCHRIFT

(11) **EP 1 199 224 B1**
(45) Veröffentlichungstag und Bekanntmachung des Hinweises auf die Patenterteilung: **23.04.2003**
(21) Anmeldenummer: 00122777.6
(22) Anmeldetag: 19.10.2000
(51) Int. Cl.: B60R 19/18

(54) **Stossfängeranordnung**
Bumper assembly
Ensemble pare-chocs

(43) Veröffentlichungstag der Anmeldung: 24.04.2002
(73) Patentinhaber: Benteler Automobiltechnik GmbH, 33104 Paderborn (DE)
(72) Erfinder: Härtel, Wulf, 33184 Altenbeken (DE); Korinth, Hendrik, 33106 Paderborn (DE)
(74) Vertreter: Ksoll, Peter, Dr.-Ing.

(56) Entgegenhaltungen:
- EP-A- 1 036 715
- WO-A-98/11267
- US-A- 1 348 030
- US-A- 4 542 925
- US-A- 5 785 367

## Beschreibung

Die Erfindung betrifft eine Stoßfängeranordnung für den durch eine Verschalung verkleideten Front- oder Heckbereich der Karosserie eines Kraftfahrzeugs.

Verschiedenartige Stoßfänger bzw. Stoßfängeranordnungen sind bekannt. So gehört durch DE 44 13 641 C1 ein Stoßfänger zum Stand der Technik mit einem als Energieabsorber ausgebildeten Querträger zur Befestigung an der Fahrzeugkarosserie. Auf der Vorderseite des Querträgers sind sich an diesem abstützende Prallkörper angeordnet aus einem energieabsorbierenden Material, das bevorzugt aus Kunststoffschaum oder einer Wabenstruktur aus Kunststoff besteht.

Aus der US-A-5,154,462 geht ein Stoßfänger hervor mit einem Querträger aus einem mit den Längsträgern fest verbundenen C-förmigen Rückenteil aus einem ersten Material, z.B. Stahl, und aus einem dieses abdeckenden C-förmigen Schließteil aus einem zweiten leichteren Material, z.B. Aluminium oder Fiberglas. Beide Teile sind so aneinander gesetzt, dass sie ein kastenförmiges Hohlprofil bilden, welches mit einem energieabsorbierenden Material wie Polypropylen oder Urethanschaum ausgefüllt wird.

Im Umfang der DE 29 41 879 A1 ist ein Stoßfängeraufbau für ein Kraftfahrzeug bekannt mit einem Querträger, der eine Mehrzahl von Ausnehmungen aufweist, welche entlang seiner Länge an der Vorderseite des Querträgers vorgesehen sind. Die Ausnehmungen sind für die Aufnahme von Stoßabsorptionskörpern aus Urethanschaum oder Polyethylenwaben vorgesehen.

Neben dem teilweise komplizierten und fertigungstechnisch aufwendigen Aufbau ist bei allen vorgenannten Ausführungsformen nachteilig, dass diese energieabsorbierende Körper auf Basis von Kunststoff, meist aus aufgeschäumten Schaumkörpern, vorsehen. Bereits bei der Herstellung dieser Körper können umweltschädigende Stoffe auftreten. Insbesondere sind diese jedoch beim Recycling eines Kraftfahrzeugs nachteilig. Die eingesetzten Kunststoffe sind mitunter nur schwer einer Wiederverwertung zuzuführen. Zudem ist eine Trennung der metallischen Werkstoffe und des Kunststoffs für eine sachgerechte Wiederaufbereitung erforderlich.

Hinzuweisen ist auch auf die gattungsgemäße DE 196 43 049 A1, die eine Stoßfängeranordnung für den Front- oder Heckbereich der Karosserie eines Kraftfahrzeugs offenbart, welche einen über Distanzkonsolen mit den Längsträgern der Karosserie verbundenen Querträger sowie einen unterhalb des Querträgers vorgesehenen Querholm umfasst, der ebenfalls an den Längsträgern abgestützt ist. Diese Ausführungsform ist jedoch vergleichsweise schwer und unnachgiebig.

Der Erfindung liegt ausgehend vom Stand der Technik die Aufgabe zugrunde, eine Stoßfängeranordnung zu schaffen, die in ihrer Grundkonzeption Stoßabsorptionskörper aus Kunststoff vermeidet und in ihrer Funktion, insbesondere was den Passantenschutz angeht, verbessert ist.

Die Lösung dieser Aufgabe besteht nach der Erfindung in einer Stoßfängeranordnung gemäß Anspruch 1, bei der der Querträger aus einem im Querschnitt U-förmigen metallischen Schalenkörper mit einem Steg und zwei Schenkeln besteht und die Schenkel eine Gitterstruktur aus einer Vielzahl nebeneinander angeordneter Öffnungen mit diese begrenzenden Rippen aufweist.

Ein solcher Schalenkörper ist leicht, was sich positiv im Sinne einer Gewichtsreduzierung auswirkt. Besonders hervorzuheben ist sein Nachgiebigkeitsverhalten. Bei einem Crash auf niedrigem Kraftniveau bei niedriger Geschwindigkeit gibt der Querträger elastisch nach. Bei Überschreiten eines vorbestimmbaren Kraftniveaus verformt sich der Querträger plastisch, so dass die aus dem Anprall resultierende Energie in Verformungsarbeit umgewandelt wird.

Das dem Querträger innewohnende definierte Nachgiebigkeitsverhalten trägt zum Erreichen eines größtmöglichen Passantenschutzes bei.

Zweckmäßigerweise erstrecken sich die Rippen in Längsrichtung des Kraftfahrzeugs (Anspruch 2).

Bewirkt werden kann das Nachgiebigkeitsverhalten der Stoßfängeranordnung dadurch, dass die Rippen als Soll-Knickstellen ausgebildet sind, wie dies Anspruch 3 vorsieht. Dies kann durch einen geringfügig abgewinkelten bzw. geknickten oder gebogenen Verlauf der Rippen realisiert sein. Selbstverständlich ist auch die Integration von andersartig ausgebildeten Soll-Knickstellen in die Rippen denkbar, die bei Überschreiten eines bestimmten Kraftniveaus definiert nachgeben.

In der vorteilhaften Ausgestaltung nach Anspruch 4 schließen sich endseitig an die Schenkel des Schalenkörpers Flansche an. Diese tragen zu einer Versteifung im hinteren, den Längsträgern zugewandten Bereich des Querträgers bei.

Eine den grundsätzlichen Erfindungsgedanken besonders vorteilhaft weiterbildende Ausführungsform ist in einer Stoßfängeranordnung nach den Merkmalen des Anspruchs 5 zu sehen. Hierbei stützt sich der Schalenkörper an einem ebenfalls quer zu den Längsträgern angeordneten inneren Profilkörper ab. Der Profilkörper weist vorzugsweise einen U-förmigen Querschnitt auf, an dessen Schenkel sich seitlich erstreckende Flansche anschließen.

An den Flanschen des Profilkörpers kann sich der Schalenkörper mit seinen Flanschen abstützen. Möglich ist beispielsweise eine schweiß-, niet-, schraub- oder klebetechnische Verbindung von Schalenkörper und Profilkörper.

Nach den Merkmalen des Anspruchs 6 weisen die Schenkel des Schalenkörpers und die Schenkel des Profilkörpers von ihren mit Abstand zueinander angeordneten Stegen aus zu den Längsträgern hin.

Durch die mit Abstand zueinander angeordneten Stege von Schalenkörper und Profilkörper sind am Querträger zwei Ebenen mit unterschiedlichen Kraftniveaus realisiert. Im Falle eines Impacts wird zunächst der außen liegende Schalenkörper belastet und zur Stoßabsorption herangezogen und dabei elastisch und/oder plastisch verformt. Ist dessen Absorptionsvermögen aufgebracht bzw. abgebaut, bilden Schalenkörper und Profilkörper gemeinsam einen Widerstand bei einem Anprall auf höherem Kraftniveau.

Das Energieabsorptionsvermögen einer erfindungsgemäßen Stoßfängeranordnung kann nach den Merkmalen von Anspruch 7 dadurch weiter gesteigert werden, dass der Querträger über Distanzkonsolen, sogenannten Crashboxen, und Anschlagplatten mit den Längsträgern verbunden ist. Die Distanzkonsolen sollen insbesondere die aus einem Anprall auf hohem Kraftniveau resultierende Energie absorbieren, indem diese in Verformungsarbeit umgewandelt wird. Damit können Schäden an der tragenden Fahrzeugstruktur weiter vermindert werden.

Eine weitere vorteilhafte Ausgestaltung des grundsätzlichen Erfindungsgedankens ist in den Merkmalen von Anspruch 8 charakterisiert. Danach ist unterhalb des Querträgers ein Querholm angeordnet.

Durch den Querholm unterhalb des Querträgers ist es möglich, eine zusätzliche Energieaufnahme bei einem Front- oder bei einem Heckcrash im bodennahen Bereich zu schaffen. Neben der Energieaufnahme wird ein weiterer positiver Effekt dieser Anordnung dadurch erzielt, dass ein Hindernis flächiger getroffen wird. Dies führt zu einer Änderung bzw. Milderung des Aufpralls. Zudem wird die Energieaufnahme auf ein weiteres Kraftniveau aufgeteilt. Dies ist insbesondere im Hinblick auf einen wirksamen Fußgängerschutz vorteilhaft.

Zweckmäßigerweise stützt sich auch der Querholm über Distanzstreben und die Anschlagplatten an den Längsträgern des Kraftfahrzeugs ab, wie dies Anspruch 9 vorsieht.

In bestimmten Anwendungsfällen ist es im Rahmen der Erfindung denkbar, zwischen dem innen liegenden Profilkörper und dem äußeren Schalenkörper stoßabsorbierende Dämpfungskörper einzugliedern. Auch wenn bei der erfindungsgemäßen Stoßfängeranordnung nach Möglichkeit ein Verzicht auf den Einsatz von Kunststoffschaumkörpern angestrebt wird, soll dies nicht gänzlich ausgeschlossen werden. Eine solche Stoßfängeranordnung erzielt eine Gewichtsreduzierung und kann insbesondere für den Einsatz bei schweren Kraftfahrzeugen zusätzliches Stoßabsorptionsvermögen schaffen.

Die Erfindung ist nachfolgend anhand eines in den Zeichnungen dargestellten Ausführungsbeispiels näher beschrieben. Es zeigen:
- Figur 1: in der Perspektive eine erfindungsgemäße Stoßfängeranordnung und
- Figur 2: die wesentlichen Bauteile der Stoßfängeranordnung in explosionsartig auseinandergezogener Darstellungsweise.

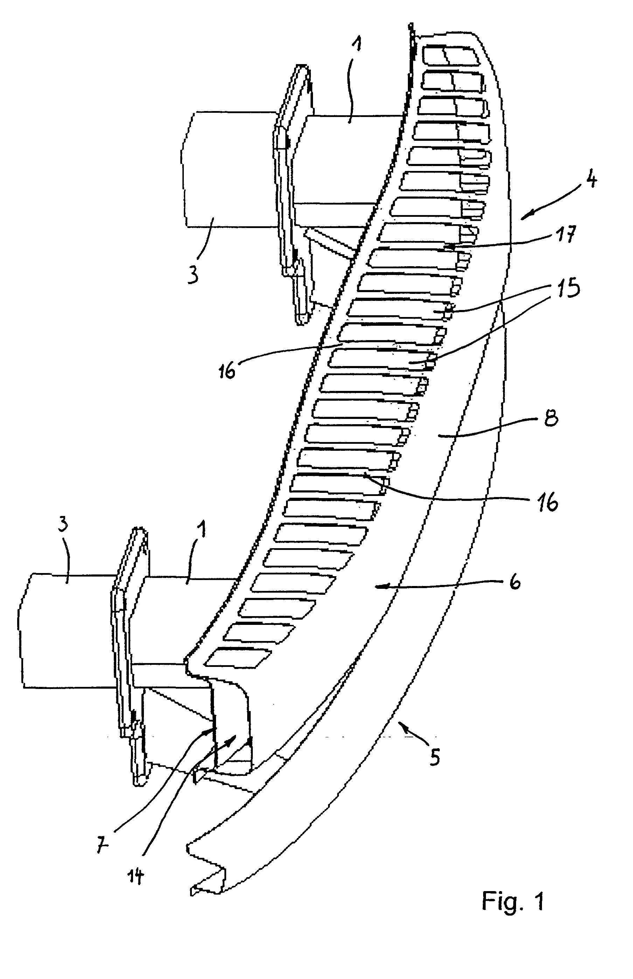

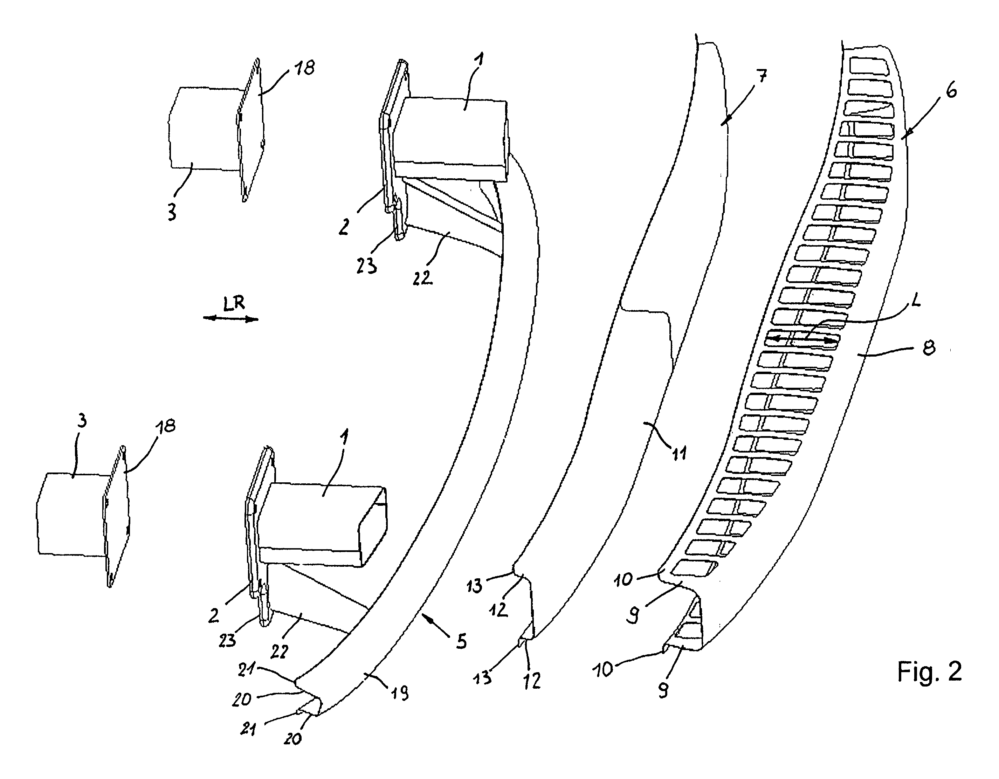

In den Figuren 1 und 2 ist eine Stoßfängeranordnung dargestellt für den durch eine hier nicht dargestellte Verschalung verkleideten Front- oder Heckbereich einer ebenfalls nicht näher veranschaulichten Karosserie eines Personenkraftwagens.

Die Stoßfängeranordnung umfasst einen endseitig über aus rechteckigen Hohlprofilen bestehenden Distanzkonsolen 1 (Crashboxen) und Anschlagplatten 2 mit den Längsträgern 3 des Kraftfahrzeugrahmens verbundenen Querträger 4. Unterhalb des Querträgers 4 ist ein Querholm 5 vorgesehen.

Der Querträger 4 ist aus einem im Querschnitt U-förmigen Schalenkörper 6 und einem im Querschnitt ebenfalls U-förmigen Profilkörper 7 zusammengesetzt. Der Schalenkörper 6 weist einen Steg 8 mit zwei Schenkeln 9 und sich hieran anschließenden, im Ausführungsbeispiel nach außen gerichteten Flanschen 10 auf. Auch der Profilkörper 7 besitzt einen zentralen Steg 11 mit seitlichen Schenkeln 12 und von diesen abstehenden Flansche 13.

Der Schalenkörper 6 stützt sich mit seinen Flanschen 10 an den Flanschen 13 des Profilkörpers 7 ab und ist hier, beispielsweise schweiß- oder klebetechnisch, mit dem Profilkörper 7 gefügt.

Die Schenkel 9 des Schalenkörpers 6 und die Schenkel 12 des Profilkörpers 7 sind von den Stegen 8 bzw. 11 ausgehend zu den Längsträgern 3 hin gerichtet. Man erkennt ferner, dass die Stege 8 bzw. 11 von Schalenkörper 6 und Profilkörper 7 zueinander mit Abstand angeordnet sind. Im Querträger 4 ist folglich zwischen Schalenkörper 6 und Profilkörper 7 einen Hohlraum 14 ausgebildet.

Die Schenkel 9 des Schalenkörpers 6 weisen eine Gitterstruktur auf aus einer Vielzahl nebeneinander angeordneten Öffnungen 15 mit diese begrenzenden Rippen 16. Die Rippen 16 erstrecken sich in Längsrichtung LR des Kraftfahrzeugs. Die Länge L der Öffnungen 15 nimmt von der Mitte des Schalenkörpers 6 ausgehend zu den Seiten hin ab. Der Steg 8 des Schalenkörpers 6 ist geschlossen.

Die Gitterstruktur des Schalenkörpers 6 verleiht dem Querträger 4 ein definiertes Nachgiebigkeitsverhalten. Bei einem Anprall auf niedrigem Kraftniveau und bei geringen Geschwindigkeiten kommt es zu einer elastisch nachgiebigen Verformung mit einem Federeffekt in den Rippen 16 des Schalenkörpers 6. Bei Überschreiten eines bestimmten Kraftniveaus verformt sich der Schalenkörper 6 plastisch. Die Rippen 16 wirken hierbei als Nachgiebigkeitselemente, durch welche die Verformung initiiert wird. Möglich ist femer, in den Rippen 16 Soll-Knickstellen vorzusehen, welche beispielsweise durch einen geringfügig abgeknickten oder gebogenen Verlauf der Rippen 16 realisierbar sind. Eine solche Sollknickstelle ist in der Figur 1 exemplarisch mit 17 angedeutet.

Die Distanzkonsolen 1 sind einerseits mit dem Querträger 4 und andererseits mit den Anschlagplatten 2 verschweißt. Die Anschlagplatten 2 sind wiederum mit Anschlagplatten 18 lösbar verbunden, welche stirnseitig jedes Längsträgers 3 angeschweißt sind.

Der Querholm 5 unterhalb des Querträgers 4 ist aus einem U-Profil mit Steg 19, Schenkeln 20 und Flanschen 21 gebildet und über schräg verlaufende Distanzstreben 22 mit unteren Zungen 23 der Anschlagplatten 2 verbunden. Die Distanzstreben 22 können aus im Querschnitt bauteilgerecht und konstruktiv abgestimmten Hohlprofilen oder auch aus U- oder Hutprofilen bestehen.

Die bei einem Anprall auftretenden Kräfte werden durch den Querholm 5 über die Fläche verteilt. Hierdurch können Scherkräfte auf die unteren Extremitäten eines Passanten reduziert werden.

### Bezugszeichenaufstellung

- 1-: Distanzkonsole
- 2-: Anschlagplatte
- 3-: Längsträger
- 4-: Querträger
- 5-: Querholm
- 6-: Schalenkörper
- 7-: Profilkörper
- 8-: Steg v. 6
- 9-: Schenkel v. 6
- 10-: Flansch v. 6
- 11-: Steg v. 7
- 12-: Schenkel v. 7
- 13-: Flansch v. 7
- 14-: Hohlraum
- 15-: Öffnung
- 16-: Rippe
- 17-: Soll-Knickstelle
- 18-: Anschlagplatte
- 19-: Steg v. 5
- 20-: Schenkel v. 5
- 21-: Flansch v. 5
- 22-: Distanzstrebe
- 23-: Zunge

- L-: Länge v. 15
- LR-: Längsrichtung

## Patentansprüche

1. Stoßfängeranordnung für ein Kraftfahrzeug mit einem quer zu den Längsträgern (3) des Kraftfahrzeugrahmens festlegbaren Querträger (4), welcher einen im Querschnitt U-förmigen Schalenkörper (6) mit einem Steg (8) und zwei Schenkeln (9) umfasst, **dadurch gekennzeichnet, dass** die Schenkel (9) des Schalenkörper (6) eine Gitterstruktur aus einer Vielzahl nebeneinander angeordneter Öffnungen (15) mit diese begrenzenden Rippen (16) aufweisen.

2. Stoßfängeranordnung nach Anspruch 1, **dadurch gekennzeichnet**,dasssichdieRippen(16)inLängsrichtung (LR) des Kraftfahrzeugs erstrecken.

3. Stoßfängeranordnung nach Anspruch 1 oder 2, **dadurch gekennzeichnet, dass** die Rippen (16) als Soll-Knickstellen (17) ausgebildet sind.

4. Stoßfängeranordnung nach einem der Ansprüche 1 bis 3, **dadurch gekennzeichnet, dass** sich endseitig an die Schenkel (9) Flansche (10) anschließen.

5. Stoßfängeranordnung nach einem der Ansprüche 1 bis 4, **dadurch gekennzeichnet, dass** sich der Schalenkörper (6) an einem ebenfalls quer zu den Längsträgern (3) angeordneten inneren Profilkörper (7) abstützt.

6. Stoßfängeranordnung nach Anspruch 5, **dadurch gekennzeichnet**,dassdieSchenkel(9)desSchalenkörpers (6) und die Schenkel (12) des Profilkörpers (7) von den mit Abstand zueinander angeordneten Stegen (8, 11) aus zu den Längsträgern (3) hin weisen.

7. Stoßfängeranordnung nach einem der Ansprüche 1 bis 6, **dadurch gekennzeichnet, dass** der Querträger (4) über Distanzkonsolen (1) und Anschlagplatten (2) mit den Längsträgern (3) verbunden ist.

8. Stoßfängeranordnung nach einem der Ansprüche 1 bis 7, **dadurch gekennzeichnet, dass** unterhalb des Querträgers (4) ein Querholm (5) angeordnet ist.

9. Stoßfängeranordnung nach Anspruch 8, **dadurch gekennzeichnet, dass** sich der Querholm (5) über Distanzstreben (22) und den Anschlagplatten (2) an den Längsträgern (3) abstützt.

## Claims

1. A bumper arrangement for a motor vehicle with a cross-member (4) fixable transversely of the longitudinal members (3) of the motor vehicle frame, said cross-member comprising a shell member (6) of U-shaped cross-section with a web (8) and two limbs (9), **characterised in that** the limbs (9) of the shell member (6) have a grid structure consisting of a plurality of openings (15) disposed side by side and having ribs (16) defining them.

2. A bumper arrangement according to claim 1, **characterised in that** the ribs (16) extend in the longitudinal direction (LR) of the motor vehicle.

3. A bumper according to claim 1 or 2, **characterised in that** the ribs (16) are constructed as intentional bending points (17).

4. A bumper according to any one of claims 1 to 3, **characterised in that** flanges (10) adjoin the ends of the limbs (9).

5. A bumper according to any one of claims 1 to 4, **characterised in that** the shell member (6) bears against an inner profile member (7) also disposed transversely of the longitudinal members (3).

6. A bumper according to claim 5, **characterised in that** the limbs (9) of the shell member (6) and the limbs (12) of the profile member (7) point away from the spaced webs (8, 11) towards the longitudinal members (3).

7. A bumper according to any one of claims 1 to 6, **characterised in that** the cross-member (4) is connected via spacer brackets (1) and stop plates (2) to the longitudinal members (3).

8. A bumper according to any one of claims 1 to 7, **characterised in that** a transverse member (5) is disposed beneath the cross-member (4).

9. A bumper according to claim 8, **characterised in that** the transverse member (5) bears via spacer struts (22) and the stop plates (2) against the longitudinal members (3).

## Revendications

1. Ensemble pare-chocs pour un véhicule automobile, comportant un support transversal (4) qui est susceptible d'être fixé transversalement aux longerons (3) du châssis du véhicule automobile et qui comprend un corps en coque (6) de section en forme de U avec une âme (8) et avec deux branches (9), **caractérisé en ce que** les branches (9) du corps en coque (6) présentent une structure en treillis formée d'une multitude d'orifices (15) ménagés les uns à côté des autres et de nervures (16) délimitant ces derniers.

2. Ensemble pare-chocs selon la revendication 1, **caractérisé en ce que** les nervures (16) s'étendent en direction longitudinale (LR) du véhicule automobile.

3. Ensemble pare-chocs selon la revendication 1 ou 2, **caractérisé en ce que** les nervures (16) sont réalisées sous forme d'emplacements destinés au flambage (17).

4. Ensemble pare-chocs selon l'une des revendications 1 à 3, **caractérisé en ce que** des rebords (10) se raccordent du côté extrémité aux branches (9).

5. Ensemble pare-chocs selon l'une des revendications 1 à 4, **caractérisé en ce que** le corps en coque (6) prend appui contre un corps profilé intérieur (7) agencé également transversalement aux longerons (3).

6. Ensemble pare-chocs selon la revendication 5, **caractérisé en ce que** les branches (9) du corps en coque (6) et les branches (12) du corps profilé (7) sont dirigées depuis les âmes (8, 11) agencées à distance l'une de l'autre vers les longerons (3).

7. Ensemble pare-chocs selon l'une des revendications 1 à 6, **caractérisé en ce que** le support transversal (4) est relié aux supports longitudinaux (3) via des consoles d'écartement (1) et via des plaques de butée (2).

8. Ensemble pare-chocs selon l'une des revendications 1 à 7, **caractérisé en ce qu'**une traverse (5) est agencée au-dessous du support transversal (4).

9. Ensemble pare-chocs selon la revendication 8, **caractérisé en ce que** la traverse (5) prend appui sur les supports longitudinaux (3) via des entretoises d'écartement (22) et via les plaques d'appui (2).
